# EUROPÄISCHE PATENTANMELDUNG

(11) **EP 3 902 080 A1**
(43) Veröffentlichungstag der Anmeldung: **27.10.2021**
(21) Anmeldenummer: 21165101.3
(22) Anmeldetag: 26.03.2021
(51) Int. Cl.: H02H 7/26, G01R 31/08, G06Q 50/00

(54) **VERFAHREN ZUM ÜBERWACHEN EINES ELEKTRISCHEN VERSORGUNGSNETZES**

(30) Priorität: 24.04.2020 DE 102020111209
(71) Anmelder: Westnetz GmbH, 44139 Dortmund (DE)
(72) Erfinder: Puhe, Frederik, 48727 Billerbeck (DE); Keune, Björn Martin, 44227 Dortmund (DE); Schmidgen, Matthias, 56653 Wassenach (DE); Wahl, Michael, 66265 Heusweiler (DE)
(74) Vertreter: Cohausz & Florack

(57) **Zusammenfassung**

Die Anmeldung betrifft ein Verfahren zum Überwachen eines elektrischen Versorgungsnetzes (114), umfassend Ermitteln einer geographischen Fehlerposition eines in dem elektrischen Versorgungsnetz (114) aufgetretenen Netzfehlers, basierend auf der Wanderwellenortungsmethode, Übertragen der ermittelten geographischen Fehlerposition an mindestens ein Fahrzeugsteuermodul (106), Ansteuern, durch das Fahrzeugsteuermodul (106), mindestens eines unbemannten Fahrzeugs (116.1, 116.2, 116.3), basierend auf der ermittelten geographischen Fehlerposition, derart, dass sich das unbemannte Fahrzeug (116.1, 116.2, 116.3) zu dem Bereich der ermittelten Fehlerposition bewegt, basierend auf der Ansteuerung, Inspizieren der ermittelten Fehlerposition durch Aufnehmen von Bilddaten in dem Bereich der ermittelten Fehlerposition durch mindestens einen optischen Sensor (120.1, 120.2, 120.3) des unbemannten Fahrzeugs (116.1, 116.2, 116.3), Bereitstellen, durch das unbemannte Fahrzeug (116.1, 116.2, 116.3), zumindest eines Teils der aufgenommenen Bilddaten einem Auswertemodul (134), und Auswerten, durch das Auswertemodul (134), der bereitgestellten Bilddaten, derart, dass eine Fehlerart des Netzfehlers und/oder ein durch den Netzfehler verursachter Schaden bestimmt wird.

## Beschreibung

Die Anmeldung betrifft ein Verfahren zum Überwachen eines elektrischen Versorgungsnetzes, umfassend ein Ermitteln einer geographischen Fehlerposition eines in dem elektrischen Versorgungsnetz aufgetretenen (zumindest potentiellen) Netzfehlers, basierend auf der Wanderwellenortungsmethode. Darüber hinaus betrifft die Anmeldung ein Überwachungssystem und eine Umspannstation.

In elektrischen Versorgungsnetzen, auch Stromversorgungsnetze genannt, kommt es immer wieder zu (tatsächlichen oder potentiellen) Netzfehlern bzw. (transienten) Fehlerereignissen, beispielsweise einen Kurzschluss bzw. Erdschluss. Beispielsweise kann in einem Stromversorgungsnetz, wie einem 110-kV-Freileitungsnetz, ein Fehlerereignis auftreten, das als möglicher bzw. potentieller Netzfehler durch in dem Stromversorgungsnetz vorhandene sekundärtechnische Betriebsmittel, wie bspw. Schutzgeräte oder Kurzschluss-/Erdschluss-Anzeiger, detektiert werden kann.

Bei Detektion eines derartigen (tatsächlichen oder potentiellen) Netzfehlers kann eine entsprechende Information an eine zentrale Recheneinrichtung (beispielsweise implementiert in einem Backendsystem), z.B. eine zuständige Netzleitstelle der Systemführung, übertragen werden. Ein stetes Ziel im Stand der Technik ist es, die genaue Fehlerposition des Netzfehlers zeitnah zu ermitteln, um zeitnah eine Inspektion an der Fehlerposition durchzuführen, so dass bei Bedarf eine zeitnahe Behebung des Netzfehlers veranlasst werden kann.

Zur Ermittlung der Fehlerposition ist es im Stand der Technik bekannt, die sogenannte Wanderwellenortungsmethode einzusetzen. Hierbei kann eine sich in den elektrischen Leitungen des elektrischen Versorgungsnetz ausbreitende elektromagnetische Wanderwelle durch mindestens eine Wanderwellenmessvorrichtung erfasst werden. Basierend hierauf kann der Ursprung der Wanderwelle, also die Fehlerposition des Netzfehlers, bestimmt werden (beispielsweise mit einer Genauigkeit von bis zu ± 150 m).

Problematisch im Stand der Technik ist jedoch, dass (unmittelbar) nach einer Bestimmung bzw. Ermittlung der Fehlerposition des aufgetretenen Netzfehlers im Versorgungsnetz, basierend auf der Wanderwellenortungsmethode, die Ursache und insbesondere der verursachte Schaden unbekannt ist.

Je nach Bedarf bzw. unter bestimmten Bedingungen wird daher im Stand der Technik eine Leitungsinspektion nach einer Ermittlung der Fehlerposition veranlasst, insbesondere beauftragt. Eine solche optionale Bedingung kann bei einem Erdschluss beispielsweise eine Mindestdauer des Vorgangs sein.

Die optische Leitungsinspektion erfolgt nach dem Stand der Technik durch mobiles, technisches Personal, welches zu der Fehlerposition geschickt wird, und verursacht entsprechende Aufwendungen.

Ist der genaue Fehlerort durch das beschriebene Messverfahren bestimmt worden, dann verringern sich diese Aufwendungen, da der Bereich der Fehlerposition bzw. der Fehlerort direkt kontrolliert werden kann und nicht die gesamte Leitungsstrecke kontrolliert werden muss. Auch erhöht sich die Wahrscheinlichkeit, dass der Fehlerort bestätigt und die Fehlerursache und/oder mögliche Schäden festgestellt werden können. Jedoch ist der Aufwand weiterhin hoch und die Zeitdauer bis zur Inspektion hoch.

Dies gilt insbesondere vor dem Hintergrund, dass je nach Fehlerereignis nicht immer ein Schaden deutlich erkennbar sein muss und mögliche Spuren nach kurzer Zeit verschwinden können - beispielsweise Rußspuren an Isolatoren oder am Boden befindliche Vogelüberreste. Darüber hinaus können Fehlerereignisse auf Leitungen auch unter ungünstigen Bedingungen Waldbrände verursachen. Auch aus diesem Grund muss die Leitungsinspektion möglichst schnell stattfinden.

### Wie beschrieben wurde, kann durch die Verwendung der

Wanderwellenortungsmethode die Zeit bis zur Feststellung des Schadens verkürzt werden. Jedoch kann diese Zeitdauer dennoch relativ lang sein und der Netzfehler in der Zwischenzeit bereits weitere Schäden verursacht haben und/oder nicht mehr erkennbar sein.

Daher liegt der Anmeldung die Aufgabe zugrunde, ein Verfahren zum Überwachen eines elektrischen Versorgungsnetzes bereitzustellen, welches eine weitere Reduktion der Zeitdauer bis zur Detektion der Ursache des Netzfehlers und insbesondere des durch den Netzfehler verursachten Schadens mit einem geringeren Aufwand ermöglicht.

Die Aufgabe wird gemäß einem ersten Aspekt der Anmeldung gelöst durch ein Verfahren zum Überwachen eines elektrischen Versorgungsnetzes gemäß Anspruch 1. Das Verfahren umfasst:
- Ermitteln einer geographischen Fehlerposition eines in dem elektrischen Versorgungsnetz aufgetretenen Netzfehlers, basierend auf der Wanderwellenortungsmethode,
- Übertragen der ermittelten geographischen Fehlerposition an mindestens ein Fahrzeugsteuermodul,
- Ansteuern, durch das Fahrzeugsteuermodul, mindestens eines unbemannten Fahrzeugs, basierend auf der ermittelten geographischen Fehlerposition, derart, dass sich das unbemannte Fahrzeug zu dem Bereich der ermittelten Fehlerposition bewegt,
- basierend auf der Ansteuerung, Inspizieren der ermittelten Fehlerposition durch Aufnehmen von Bilddaten in dem Bereich der ermittelten Fehlerposition durch mindestens einen optischen Sensor des unbemannten Fahrzeugs,
- Bereitstellen, durch das unbemannte Fahrzeug, zumindest eines Teils der aufgenommenen Bilddaten einem Auswertemodul, und
- Auswerten, durch das Auswertemodul, der bereitgestellten Bilddaten, derart, dass eine Fehlerart des Netzfehlers und/oder ein durch den Netzfehler verursachter Schaden bestimmt wird.

Indem im Gegensatz zum Stand der Technik anmeldungsgemäß ein Verfahren zum Überwachen eines elektrischen Versorgungsnetzes bereitgestellt wird, bei dem zunächst mit einer hohen Genauigkeit eine Fehlerposition eines potentiellen Netzfehlers bestimmt wird, und dann basierend auf der bestimmten Fehlerposition ein unbemanntes Fahrzeug derart angesteuert wird, dass das elektrische Versorgungsnetz an der Fehlerposition inspiziert wird, wird eine signifikante Reduktion der Zeitdauer bis zur Detektion der Ursache des Netzfehlers und insbesondere des durch den Netzfehler verursachten Schadens ermöglicht.

Maßnahmen zur Beseitigung des Netzfehlers können in noch kürzerer Zeit bewirkt werden, basierend auf der detektierten Ursache des Netzfehlers und insbesondere dem durch den Netzfehler verursachten Schaden. Eine Prozessoptimierung der Leitungsinspektion kann erfolgen, insbesondere dank Fehlerortung mit Wanderwellenmessung und durch zielgerichtete und ereignisgesteuerte Leitungsinspektion mit einem unbemannten Fahrzeug. Der Aufwand zur Überwachung eines elektrischen Versorgungsnetzes wird reduziert.

Das anmeldungsgemäße Verfahren dient insbesondere der Fernüberwachung eines elektrischen Versorgungsnetzes bzw. Stromversorgungsnetzes. Ein elektrisches Versorgungsnetz meint insbesondere ein leitungsgebundenes Netz, eingerichtet zur Übertragung von elektrischer Energie. Insbesondere kann ein Stromversorgungsnetz aus einer Vielzahl von Betriebsmitteln bzw. Bauelementen gebildet sein, wie Leitungen, Strommasten, Isolatoren, Transformatoren etc.

Das überwachte elektrische Versorgungsnetz kann ein Höchstspannungs-, Hochspannungs-, Mittelspanungs- und/oder Niederspannungsnetz sein. Vorzugsweise kann das elektrische Versorgungsnetz ein Freileitungsnetz sein. Es versteht sich, dass bei anderen Varianten das elektrische Versorgungsnetz alternativ oder zusätzlich ein/en anderer/n Netztyp sein kann bzw. umfassen kann. Beispielsweise kann das Versorgungsnetz auch ein Unterwasserkabelnetz sein.

Das Überwachen des elektrischen Versorgungsnetzes umfasst ein Ermitteln bzw. Bestimmen einer geographischen Fehlerposition eines in dem elektrischen Versorgungsnetz aufgetretenen (tatsächlichen oder potentiellen) Netzfehlers, basierend auf der Wanderwellenortungsmethode. Ein Netzfehler meint vorliegend insbesondere ein Ereignis, welches grundsätzlich auf einen Fehler im Netz, wie einen Kurzschluss bzw. Erdschluss zurückzuführbar ist (jedoch auch andere Ursachen haben kann). Anders ausgedrückt ist ein Netzfehler ein potentieller Netzfehler. Ob der potentielle Netzfehler ein tatsächlicher Netzfehler ist, kann insbesondere im nachfolgend beschriebenen Inspektionsvorgang ermittelt werden.

Die Ermittlung der Fehlerposition erfolgt unter Anwendung der sogenannten Wanderwellenortungsmethode. Diese Methode erlaubt eine Bestimmung des potentiellen Fehlerorts mit einer hohen Genauigkeit (beispielsweise mit einer Genauigkeit ± 150 m). Bei einem Freileitungsnetz kann vorzugsweise unter Verwendung der Wanderwellenortungsmethode eine mastgenaue Fehlerortung erfolgen.

Nach einer Ermittlung der geographischen Fehlerposition kann diese an ein Fahrzeugsteuermodul übertragen werden. Dies meint insbesondere, dass die ermittelte geographische Fehlerposition zur weiteren Verarbeitung durch das Fahrzeugsteuermodul zur Verfügung gestellt wird.

Das Fahrzeugsteuermodul ist eingerichtet zum Ansteuern mindestens eines unbemannten Fahrzeugs. Es versteht sich, dass eine Mehrzahl von unbemannten

Fahrzeugen durch ein Fahrzeugsteuermodul (fern-)angesteuert werden kann. Das Fahrzeugsteuermodul kann insbesondere eine Bodenstation sein, die zum Fernsteuern des mindestens einen unbemannten Fahrzeugs eingerichtet ist.

Das mindestens eine unbemannte Fahrzeug ist vorzugsweise ein unbemanntes Luftfahrzeug, insbesondere in Form einer Drohne. Ein derartiges Luftfahrzeug eignet sich besonders, um zeitnah eine Inspektion an der ermittelten Fehlerposition durchzuführen. Insbesondere kann ein unbemanntes Luftfahrzeug eine Fehlerposition (auch wenn diese in einem Bereich liegt, an der kein Weg/Straße vorhanden ist) zeitnah erreichen und insbesondere bei Freileitung in einfacher Weise eine optische Inspektion durchführen.

Das mindestens eine unbemannte Fahrzeug kann alternativ oder zusätzlich ein unbemanntes Landfahrzeug und/oder ein unbemanntes Wasserfahrzeug (insbesondere bei einem Seekabelnetz) sein.

Anmeldungsgemäß erfolgt ein Ansteuern des mindestens einen unbemannten Fahrzeugs zumindest unter Verwendung der ermittelten geographischen Fehlerposition. Vorzugsweise ist die ermittelte geographische Fehlerposition, die zur Ansteuerung des unbemannten Fahrzeugs verwendet wird, ein geographischer Zielkoordinatendatensatz, der von dem Fahrzeugsteuermodul (bzw. dessen Prozessor) verarbeitbar ist und insbesondere zum Fernsteuern des unbemannten Fahrzeugs verwendet werden kann.

Insbesondere kann der geographische Zielkoordinatendatensatz in einem Format vorliegen, das von dem Fahrzeugsteuermodul direkt verarbeitet werden kann. Anders ausgedrückt kann das Fahrzeugsteuermodul auf den bereitgestellten Zielkoordinatendatensatz abgestimmt bzw. entsprechend eingerichtet sein.

Bei anderen Varianten der Anmeldung kann ein Übersetzungsmodul vorgesehen sein, um eine in einem ersten Format vorliegende ermittelte geographische Fehlerposition in ein zweites Format zu wandeln, welches von dem Fahrzeugsteuermodul verarbeitet werden kann.

Wie bereits beschrieben wurde, kann eine geographische Fehlerposition in Form eines geographischen Zielkoordinatendatensatz vorliegen. Der geographische Zielkoordinatendatensatz kann insbesondere geographische Zielkoordinaten, wie GPS-Daten, Galileo-Daten oder dergleichen umfassen. Insbesondere können die Koordinaten einen Zielbereich bzw. den Bereich, der aufgrund der ermittelten Fehlerposition inspiziert werden soll, angeben, der die Messtoleranz (z.B. ± 150 m) der eingesetzten Wanderwellenortungsmethode berücksichtigt.

Vorzugsweise erfolgt ein Ansteuern des mindestens einen unbemannten Fahrzeugs unmittelbar nach Ermittlung der geographischen Fehlerposition. Dies reduziert die Zeitdauer bis zur Ermittlung einer Fehlerart des Netzfehlers und/oder ein durch den Netzfehler verursachter Schaden (wenn denn ein tatsächlicher Netzfehler überhaupt vorliegt) noch weiter.

Das mindestens eine unbemannte Fahrzeug wird derart angesteuert, dass es sich zu dem Bereich, insbesondere dem im Zielkoordinatendatensatz bestimmten Bereich, der ermittelten Fehlerposition bewegt. Insbesondere wird das unbemannte Fahrzeug derart angesteuert, dass ein Inspizieren des Versorgungsnetzabschnitts in dem genannten Bereich durch das unbemannte Fahrzeug durchgeführt wird, insbesondere entsprechend vorgebbarer Inspektionsvorgaben.

Anmeldungsgemäß ist eine optische Inspektion insbesondere des genannten Versorgungsnetzabschnitts bzw. -bereichs vorgesehen. Hierzu ist das unbemannte Fahrzeug mit mindestens einem optischen Sensor ausgestattet, der eingerichtet ist zum Aufnehmen von Bilddaten von dem Versorgungsnetzabschnitt, insbesondere des entsprechenden Bereichs. Vorzugsweise kann der mindestens eine optische Sensor eine Kamera und/oder eine Wärmebildkamera und/oder eine Nachtsichtkamera sein. Es versteht sich, dass zwei oder mehr (unterschiedliche) optische Sensoren vorgesehen sein können und/oder unbemannte Fahrzeuge mit unterschiedlichen optischen Sensoren. Eine optische Inspizierung ermöglicht insbesondere ein Detektieren von optischen Spuren, die ein Netzfehler hinterlassen haben kann. Beispielhafte und nicht abschließende Spuren sind Rußspuren, beispielsweise an einem Isolator (oder einem anderen Betriebsmittel), Vogelüberreste, Brände etc. Indem ein unbemanntes Fahrzeug insbesondere in Form eines Luftfahrzeugs angesteuert wird, vorzugsweise unmittelbar nach Ermittlung der Fehlerposition, können auch noch Spuren entdeckt werden, die relativ schnell auf einem Fehlerereignis wieder verschwunden sind.

Zumindest ein Teil der aufgenommenen Bilddaten, zumindest die gesamten im Bereich des ermittelten Netzfehlers aufgenommenen Bilddaten, werden einem Auswertemodul zur Verfügung gestellt. Das Auswertemodul ist eingerichtet zum Auswerten der Bilddaten, derart, dass eine Fehlerart des Netzfehlers und/oder ein durch den Netzfehler verursachter Schaden bestimmt wird/werden. Zeitnah wird eine Fehlerursache oder ein entstandener Schaden bestimmt.

Vorzugsweise kann ein (automatisches) Bewirken, durch das Auswertemodul, mindestens einer Maßnahme zur Beseitigung des Netzfehlers erfolgen, basierend auf der Auswertung der aufgenommenen Bilddaten. Zeitnah wird/werden der Netzfehler und/oder der durch den Netzfehler verursachte Schaden beseitigt oder zumindest reduziert.

Gemäß einer Ausführungsform des anmeldungsgemäßen Verfahrens kann das Ansteuern des mindestens einen unbemannten Fahrzeugs abhängig von mindestens einer vorgegebenen weiteren Ansteuerbedingung (z.B. Vorliegen einer Detektion des Netzfehlers durch mindestens ein weiteres Betriebsmittel des Versorgungsnetzes, wie ein Schutzgerät und/oder ein Kurzschluss-/Erdschluss-Anzeiger; Vorliegen eines Erdschlusses für eine bestimmte Mindestdauer; etc.) erfolgen.

Insbesondere kann ein Ansteuern nur dann erfolgen, wenn zusätzlich zu der Detektion einer Wanderwelle im elektrischen Versorgungsnetz eine weitere Ansteuerbedingung vorliegt, insbesondere ein weiteres Indiz für einen aufgetretenen Netzfehler. Beispielsweise kann ein Ansteuern nur dann erfolgen, wenn neben einer ermittelten Fehlerposition mindestens eine Meldung eines Betriebsmittels erhalten wurde, dass ein Netzfehler aufgetreten ist (und/oder mindestens eine der anderen genannten beispielhaften Ansteuerbedingungen).

Gemäß einer weiteren Ausführungsform des anmeldungsgemäßen Verfahrens kann das Ermitteln der geographischen Fehlerposition eines in dem elektrischen Versorgungsnetz aufgetretenen (tatsächlichen oder potentiellen) Netzfehlers ein Erfassen einer Wanderwelle, die durch den (tatsächlichen oder potentiellen) Netzfehler ausgelöst wird, durch mindestens eine in dem elektrischen Versorgungsnetz installierte Wanderwellenmessvorrichtung umfassen. Vorzugsweise kann verteilt in dem Versorgungsnetz an den elektrischen Leitungen eine Vielzahl von Wanderwellenmessvorrichtungen an unterschiedlichen Installationsorten angeordnet sein. Bei einer Erfassung einer Wanderwelle kann mindestens ein Messdatensatz durch die Wanderwellenmessvorrichtung erzeugt werden. Der Messdatensatz kann zumindest den Erfassungszeitpunkt der Wanderwelle enthalten. Ein derartiger Messdatensatz kann verwendet werden, um die Fehlerposition des Netzfehlers, also den Ursprung der Wanderwelle, zu bestimmen.

Vorzugsweise kann basierend auf dem mindestens einen Messdatensatz ein Bestimmen der Entfernung der Netzfehlerposition, an dem der Netzfehler die Wanderwelle ausgelöst hat, zu der mindestens einen Wanderwellenmessvorrichtung erfolgen.

Insbesondere kann durch die zuvor beschriebene wanderwellen-basierte Fehlerortung ein Netzfehler, der zur Entstehung von elektromagnetischen Wanderwellen an dem Ursprungsort des Netzfehlers geführt hat, sehr genau geortet werden. Wanderwellen in einem Versorgungsnetz breiten sich mit nahezu Lichtgeschwindigkeit entlang der elektrischen Leitungen im Versorgungsnetz. Eine Wanderwelle kann durch eine im Versorgungsnetz installierte Wanderwellenmessvorrichtung (z.B. Wandler oder Sensor) gemessen werden.

Dies geschieht beispielsweise dadurch, dass an den beiden Enden einer Leitungsstrecke des Versorgungsnetzes die jeweils erste von einem Fehlerort ausgehende Wanderwelle mit einer zeitsynchronisierten Messung gemessen wird, also der jeweilige Erfassungszeitpunkt der ersten Wanderwelle erfasst wird. Durch einen Vergleich der beiden Messdatensätze, umfassend den jeweiligen Erfassungszeitpunkt, kann bei bekannter Leitungslänge und bekannter Wellenausbreitungsgeschwindigkeit der Fehlerort bestimmt werden, insbesondere mit einer hohen Genauigkeit.

Bei einem derartigen beidseitigen Messverfahren kann der Erfassungszeitpunkt bzw. die Ankunftszeit der jeweils ersten gemessenen Wanderwellen an den Enden einer überwachten Leitungsstrecke miteinander verglichen werden. Hierzu wird insbesondere eine gemeinsame Zeitreferenz vorausgesetzt, z.B. die UTC-Zeit per GPS.

Alternativ oder zusätzlich kann eine Fehlerortung mit Wanderwellen auch mit nur einer Wanderwellenmessvorrichtung bzw. einem einzelnen Messpunkt erfolgen, indem insbesondere die Reflexionen der Wanderwellen an der Fehlerstelle bzw. der Fehlerposition ausgewertet werden. Bei einem derartigen einseitigen Messverfahren kann durch denselben Messpunkt an einem Ende der überwachten Leitungsstrecke der Erfassungszeitpunkt bzw. die Ankunftszeit der ersten gemessenen Wanderwelle und der Erfassungszeitpunkt bzw. die Ankunftszeit einer später gemessenen Wanderwelle, die die Reflexion der ersten Wanderwelle am Netzfehler bzw. Fehlerereignis darstellt, miteinander verglichen werden.

Gemäß einer weiteren Ausführungsform des anmeldungsgemäßen Verfahrens kann bei einer Erfassung einer Wanderwelle durch die Wanderwellenmessvorrichtung der erzeugte Messdatensatz (umfassend den Erfassungszeitpunkt bzw. die Ankunftszeit der gemessenen Wanderwelle) und zumindest eine Positionsinformation der Wanderwellenmessvorrichtung durch ein Positionsermittlungsmodul erhalten werden. Beispielsweise kann die mindestens eine empfangende Wanderwellenmessvorrichtung einen Messdatensatz erzeugen, umfassend den gemessenen Erfassungszeitpunkt und die Positionsinformation, und diesen insbesondere an ein (zentrales) Positionsermittlungsmodul übertragen.

Eine Positionsinformation meint insbesondere eine Angabe, aus der die (geographische) Position der Wanderwellenmessvorrichtung zumindest ableitbar ist. Eine Positionsinformation kann beispielsweise ein Koordinatensatz sein, umfassend geographische Koordinaten (z.B. GPS-Daten), oder eine systemweit eindeutige Kennung, mit der aus für jede Wanderwellenmessvorrichtung gespeicherten Datensätzen, umfassend die jeweilige Kennung und den Installationsort, der entsprechende Installationsort bestimmt werden kann.

Vorzugsweise kann eine geographische Fehlerposition ermittelt werden, basierend auf dem erhaltenen Messdatensatz, der Positionsinformation der Wanderwellenmessvorrichtung (die in dem Messdatensatz enthalten sein kann) und/oder in einer geographischen Informationsdatenbank (z.B. sogenannte GIS (Geographisches Informationssystem)-Datenbank) gespeicherten Positionsdaten des elektrischen Versorgungsnetzes. Wie zuvor beschrieben wurde, kann die Entfernung von der mindestens einen (bei einem einseitigen Messverfahren) oder der mindestens zwei Wanderwellenmessvorrichtung(en) (bei einem zweiseitigen Messverfahren) zu dem Ursprungsort des Netzfehlers, also zur Fehlerposition, ermittelt werden. Basierend auf der bestimmten Entfernung, der Positionsinformation der mindestens einen Wanderwellenmessvorrichtung und den gespeicherten Positionsdaten kann dann die geographische Fehlerposition, insbesondere in Form eines geographischen Zielkoordinatendatensatz, generiert werden. In der geographischen Informationsdatenbank kann insbesondere die geographische Topologie des überwachten Versorgungsnetzes abgebildet und gespeichert sein.

Gemäß einer weiteren Ausführungsform des anmeldungsgemäßen Verfahrens kann das Bereitstellen der aufgenommenen Bilddaten ein Erhalten der Bilddaten durch das Auswertemodul zumindest unmittelbar nach einem Aufnehmen der Bilddaten durch den optischen Sensor des unbemannten Fahrzeugs umfassen. Besonders bevorzugt kann eine Live-Bilddatenübertragung bzw. Echtzeitbilddatenübertragung über ein drahtloses Kommunikationsnetz erfolgen. Dies erlaubt insbesondere eine (nahezu) Echtzeit-Auswertung der Bilddaten durch das mindestens eine Auswertemodul.

Bei anderen Varianten der Anmeldung kann alternativ oder zusätzlich eine Übertragung der Bilddaten erst nach einer Rückkehr des unbemannten Fahrzeugs an einen bestimmten Zielpunkt erfolgen. Die Ergebnisse der Inspektion in Form von Bilddaten können insbesondere je nach Bedarf und Möglichkeit direkt über einen nachrichtentechnischen Dienst kommuniziert oder erst bei Ankunft an einem vorgegebenen Ort, bspw. am Startpunkt der Inspektionsmission oder einem bestimmten Ladepunkt, insbesondere der Basisstation des unbemannten Fahrzeugs, übertragen werden.

Gemäß einer bevorzugten Ausführungsform des anmeldungsgemäßen Verfahrens kann das Auswerten der Bilddaten ein Abgleichen (bzw. Vergleichen) der Bilddaten mit gespeicherten historischen Netzfehlerdaten umfassen. Beispielsweise können historische Bilddaten von vergangenen Netzfehlern und deren Schadensbilder gespeichert sein. Durch einen Vergleich (insbesondere ausgeführt durch ein Bilddatenvergleichsmodul) kann eine Fehlerart des Netzfehlers und/oder ein durch den Netzfehler verursachter Schaden insbesondere zeitnah und in exakter Weise bestimmt werden.

Die Ergebnisse der Inspektion, insbesondere die aufgenommenen Bilddaten, können gespeichert werden und insbesondere direkt bewertet/weiterverarbeitet werden. Ein Abgleich mit weiteren Informationen und Daten, bspw. historischen/statistischen Erfahrungen zu den Auswirkungen von Fehlerauswirkungen und/oder Wanderwellen-Einflüsse auf Betriebsmittel usw. können bei der Auswertung berücksichtigt werden. Wie bereits beschrieben wurde, können anhand der Auswertung Folgemaßnahmen eingeleitet werden.

Wie ferner bereits beschrieben wurde, erfolgt ein Ansteuern, durch das Fahrzeugsteuermodul, mindestens eines unbemannten Fahrzeugs, basierend auf der ermittelten geographischen Fehlerposition, insbesondere einem geographischen Zielkoordinatensatz. Neben dem Zielbereich können vorzugsweise weitere Steuerparameter vorgegeben werden, wie die zu fliegende/fahrende Route (beispielsweise kann es hier Vorgaben geben, bestimmte Gebiete nicht zu durchqueren), die Geschwindigkeit (z.B. möglichst schnell, möglichst energiesparend) etc. Alternativ oder zusätzlich können Inspektionsvorgaben vorgegeben werden, wie beispielsweise eine Aufnahmen von Bilddaten durchzuführen ist (aus welchem Abstand, aus welcher Perspektive, mit welcher Auflösung etc.).

Gemäß einer besonders bevorzugten Ausführungsform des anmeldungsgemäßen Verfahrens kann das Ansteuern eines unbemannten Fahrzeugs ein Auswählen eines unbemannten Fahrzeugs aus einer Mehrzahl von verfügbaren unbemannten Fahrzeugen umfassen. Das Auswählen kann zumindest basierend auf der ermittelten Fehlerposition und der jeweiligen Positionsinformationen der verfügbaren unbemannten Fahrzeuge (sowie mindestens einer Auswahlregel) erfolgen. Beispielsweise kann eine Auswahlregel vorgesehen sein. In dieser kann beispielsweise festgelegt sein, dass (stets) das unbemannte Fahrzeug ausgewählt wird, welches die geringste Entfernung (hier kann insbesondere die tatsächlich zurückzulegende Route von der Basisstation des Fahrzeugs zur Fehlerposition und nicht die Luftliniendistanz herangezogen werden) zur geographischen Netzposition besitzt. Hierdurch kann die Zeit bis zur Detektion der Fehlerursache und/oder des verursachten Schadens noch weiter reduziert werden. Es versteht sich, dass andere Auswahlregel alternativ oder zusätzlich vorgesehen sein können.

Vorzugsweise kann, alternativ oder insbesondere zusätzlich, das Ansteuern eines unbemannten Fahrzeugs ein Auswählen eines unbemannten Fahrzeugs aus einer

Mehrzahl von verfügbaren unbemannten Fahrzeugen umfassen, zumindest basierend auf dem jeweiligen Zustand der verfügbaren unbemannten Fahrzeuge und/oder den jeweiligen Leistungsdaten der verfügbaren unbemannten Fahrzeuge (sowie der mindestens einen Auswahlregel).

Insbesondere kann (in der mindestens einen Auswahlregel) der augenblickliche Zustand der jeweiligen unbemannten Fahrzeuge berücksichtigt werden, wie der augenblickliche Energievorrat (z.B. Ladezustand eines elektrischen Energiespeichers), die Funktionsfähigkeit des Fahrzeugs (beispielsweise kann eine Einschränkung einer bestimmten Funktion oder keine Einschränkung vorliegen) etc. Wird beispielsweise festgestellt, dass er augenblickliche Energievorrat eines Fahrzeugs nicht ausreicht, eine Inspektion an einem bestimmten Fehlerort durchzuführen, kann ein anderes Fahrzeug ausgewählt werden, auch wenn dies beispielsweise in einer größeren Distanz zum Fehlerort stationiert ist (aber einen ausreichenden Energievorrat besitzt).

Auch können die Leistungsdaten der verfügbaren unbemannten Fahrzeuge (in der mindestens einen Auswahlregel) berücksichtigt werden. Ist ein Fahrzeug beispielsweise nicht mit einer Wärmebildkamera ausgestattet, erfordern die Sichtverhältnisse jedoch eine solche Kamera, kann dies berücksichtigt werden. Dann können beispielsweise nur Fahrzeuge grundsätzlich ausgewählt werden, welche eine solche Kamera aufweisen. Von diesen kann wiederum das Fahrzeug ausgewählt werden, welches die geringste Entfernung (hier kann insbesondere die tatsächlich zurückzulegende Route und nicht die Luftliniendistanz herangezogen werden) zur geographischen Netzposition besitzt. Es versteht sich, dass zusätzlich, wie beschrieben, der Zustand der jeweiligen Fahrzeuge berücksichtigt werden kann. Entsprechende Vorgaben können durch mindestens eine Auswahlregel vorgegeben werden.

Um die Sichtverhältnisse zu berücksichtigen, können entsprechende Daten, wie Wetterdaten an der Netzposition, Zeitdaten (z.B. Tag oder Nacht) und dergleichen bei der Ansteuerung, insbesondere der Auswahl, herangezogen werden.

Gemäß einer weiteren Ausführungsform des anmeldungsgemäßen Verfahrens können zumindest die mit einem Netzfehler in Relation stehenden erfassten Netzfehlerdaten in einer Datenbank gespeichert werden. Der Zustand des überwachten elektrischen Versorgungsnetzes kann auf einem Bildschirmmodul dargestellt werden, zumindest basierend auf den gespeicherten Netzfehlerdaten. Insbesondere kann eine zustandsorientierte Instandhaltung erreicht werden, insbesondere durch Verknüpfung von Wanderwellenmessung, Meldung in zentraler Leittechnik und Leitungsinspektion bzw. Bilddaten.

Anhand der Summe an aufgezeichneten Daten aus Wanderwellenmessungen, Meldungen der zentralen Leittechnik (also von Betriebsmitteln, wie Schutzgeräte oder Kurzschluss-/Erdschluss-Anzeiger) und Leitungsinspektionsdaten, also insbesondere den Bilddaten, der unbemannten Fahrzeuge, kann in einem Softwarewerkzeug der Zustand des überwachten Versorgungsnetz, insbesondere mindestens einer überwachten Leitungsstrecke bzw. den primärtechnischen Betriebsmittel, dargestellt werden. Dies kann vorzugsweise grafisch anhand einer Heatmap erfolgen, die verschiedene Informationen (Fehlerereignis bzw. Netzfehler(art), Meldung, Bilddaten) (per Auswahl) berücksichtigt. Beispielsweise kann dargestellt werden, wie häufig ein bestimmter Netzfehler, z.B. ein Erdschlusswischer, an einem bestimmten Betriebsmittel, z.B. Freileitungsisolator, im Vergleich zu anderen gleichartigen Betriebsmitteln, z.B. weitere Freileitungsisolatoren, aufgetreten sind. Zusätzlich kann beispielsweise angezeigt werden, wie sich der Betriebsmittelzustand mindestens eines Betriebsmittels im Laufe der Zeit verändert hat. Hotspots können identifiziert und insbesondere in Instandhaltungsstrategien berücksichtigt werden.

Gemäß einer weiteren Ausführungsform des anmeldungsgemäßen Verfahren kann, basierend auf den gespeicherten Netzfehlerdaten, für mindestens ein in dem elektrischen Versorgungsnetz installiertes Betriebsmittel, eine Restlebensdauer des installierten Betriebsmittels prognostiziert werden (beispielsweise durch ein Prognosemodul).

Insbesondere anhand der wiederholten Verknüpfung zwischen Fehlerereignissen bzw. Netzfehlern und Leitungsinspektionen bzw. Bilddaten kann eine Prognosefunktion entwickelt werden, beispielsweise indem ein kausaler Zusammenhang zwischen Fehlerereignis und Betriebsmittelzustand hergestellt werden kann. Hierdurch kann sich perspektivisch ableiten lassen, also prognostiziert werden, wie lange bzw. wie viele transiente Ereignisse bzw. Fehlerereignisse ein Betriebsmittel noch (voraussichtlich) standhält, bevor es ausgetauscht werden muss. Die Besonderheit ist insbesondere, dass anhand der Kombination aus der Kenntnis des Fehlerereignisses und der unmittelbaren bildgebenden Zustandskontrolle ein Zusammenhang zwischen Ereignissen und ihren Auswirkungen auf den Betriebsmittelzustand möglich ist. Insbesondere wird der Betriebsmittelzustand nicht nur durch ein bildgebendes Verfahren, sondern auch durch messtechnische Verfahren festgestellt; denn nicht immer kann jede Auswirkung eines Fehlerereignisses bildtechnisch erfasst werden und umgekehrt kann nicht jedes Ereignis messtechnisch erfasst werden.

Ein weiterer Aspekt der Anmeldung ist ein Überwachungssystem zum Überwachen eines elektrischen Versorgungsnetzes, umfassend:
- mindestens ein Positionsermittlungsmodul, eingerichtet zum Ermitteln einer geographischen Fehlerposition eines in dem elektrischen Versorgungsnetz aufgetretenen Netzfehlers, basierend auf der Wanderwellenortungsmethode,
- mindestens ein Fahrzeugsteuermodul,
- mindestens ein Übertragungsmodul, eingerichtet zum Übertragen der ermittelten geographischen Fehlerposition an das Fahrzeugsteuermodul,
- wobei das Fahrzeugsteuermodul eingerichtet ist zum Ansteuern mindestens eines unbemannten Fahrzeugs, basierend auf der ermittelten geographischen Fehlerposition, derart, dass sich das unbemannte Fahrzeug zu der ermittelten Fehlerposition bewegt und ein Inspizieren der ermittelten Fehlerposition durch Aufnehmen von Bilddaten in dem Bereich der ermittelten Fehlerposition mit mindestens einem optischen Sensor des unbemannten Fahrzeugs durchführt,
- mindestens ein Auswertemodul, eingerichtet zum Auswerten von durch das unbemannte Fahrzeug bereitgestellten Bilddaten,
- wobei das Auswertemodul eingerichtet ist zum Auswerten der Bilddaten, derart, dass eine Fehlerart des Netzfehlers und/oder ein durch den Netzfehler verursachter Schaden bestimmt wird/werden.

Das Auswertemodul kann eingerichtet sein zum (automatischen) Bewirken einer Maßnahme zur Beseitigung des Netzfehlers, basierend auf der Auswertung der aufgenommenen Bilddaten.

Insbesondere kann das zuvor beschriebene Verfahren verwendet werden, um das Überwachungssystem zu betreiben.

Das Überwachungssystem kann mindestens eine Recheneinrichtung umfassen, welche die vorgenannten Module umfasst. Ferner kann mindestens ein Datenspeicher vorgesehen sein, um die gespeicherten Daten (z.B. historische Daten etc.) zu speichern.

Die mindestens eine Recheneinrichtung kann in einem Backendsystem (z.B. gebildet durch einen oder mehrere (verteilt angeordnete) Server) implementiert sein, welches die zuvor beschriebenen Module umfassen kann. Die Recheneinrichtung kann mit einer Mehrzahl von Wanderwellenmessvorrichtung kommunikativ verbindbar sein (und diese nicht selbst umfassen) oder diese umfassen. Entsprechendes gilt für das mindestens eine unbemannte Fahrzeug.

Gemäß einer besonders bevorzugten Ausführungsform des anmeldungsgemäßen Überwachungssystems kann eine Umspannstation des elektrischen

Versorgungsnetzes eine Basisstation des mindestens einen unbemannten Fahrzeugs umfassen. Anders ausgedrückt kann das mindestens eine unbemannte Fahrzeug in oder an einer Umspannstation des elektrischen Versorgungsnetzes stationiert sein.

Insbesondere kann sich ein unbemanntes Fahrzeug innerhalb einer Umspannanlage im überwachten Netzgebiet befinden und dort auf eine Ansteuerung warten. Neben einer gesicherten Stationierung wird hierdurch erreicht, dass sich das unbemannte Fahrzeug in unmittelbarer Nähe zum überwachten elektrischen Versorgungsnetz befindet.

Das Fahrzeugsteuermodul kann in einer zentralen Steuervorrichtung implementiert sein, das insbesondere eine Mehrzahl von unbemannten Fahrzeugen fernsteuern kann. Alternativ kann das Fahrzeugsteuermodul auch in der Recheneinrichtung integriert sein.

Ein weiterer Aspekt der Anmeldung ist eine Umspannstation mit einem innerhalb der Umspannstation stationierten unbemannten Fahrzeug, wobei das unbemannte Fahrzeug ansteuerbar ist von einem Fahrzeugsteuermodul basierend auf einen durch eine Wanderwellenortungsmethode ermittelte geographischen Fehlerposition eines in dem elektrischen Versorgungsnetz aufgetretenen Netzfehlers, derart, dass sich das unbemannte Fahrzeug zu der ermittelten Fehlerposition bewegt und ein Inspizieren der ermittelten Fehlerposition durch Aufnehmen von Bilddaten in dem Bereich der ermittelten Fehlerposition mit mindestens einem optischen Sensor des unbemannten Fahrzeugs durchführt.

Die Umspannstation kann insbesondere mindestens eine elektrische Ladestation umfassen, eingerichtet zum Aufladen des mindestens einen unbemannten Fahrzeugs. Alternativ oder zusätzlich kann auch an anderen Orten, insbesondere entlang der Leitungen des mindestens einen überwachten Versorgungsnetz, mindestens eine Ladestation bzw. ein Ladepunkt zum Aufladen des mindestens einen unbemannten Fahrzeugs angeordnet sein.

Die hier beschriebenen Gegenstände kombinieren die wanderwellenbasierte Fehlerortung mit einer automatisierten Leitungsinspektion insbesondere mit Drohnen in einem neuartigen System bzw. Verfahren, um dadurch eine ereignisgesteuerte, technisch-wirtschaftlich optimale Leitungsinspektion zu erreichen und somit die Erfolgswahrscheinlichkeit und Ergebnisqualität zu verbessern. Das anmeldungsgemäße System bzw. das anmeldungsgemäße Verfahren eignet sich für alle Spannungsebenen und Leitungen eines Stromversorgungnetzes, ebenso wie für alle Ereignisse bzw. (transiente) Netzfehler, die Wanderwellen und ihre Ausbreitung im Versorgungsnetz verursachen. Das anmeldungsgemäße System bzw. das anmeldungsgemäße Verfahren verbindet ein konkretes Ereignis mit dem zugehörigen Ursprungsort und einer automatisiert stattfindenden Inspektion zur Prüfung und Schadensanalyse.

Das anmeldungsgemäße Verfahren kann zumindest teilweise durch ein Computerprogramm gebildet sein. Das Computerprogramm(-produkt) umfasst Befehle, die bei der Ausführung des Computerprogramms durch einen Prozessor diesen veranlassen, zumindest einen Teil der zuvor beschriebenen Verfahrensschritte auszuführen. Das Computerprogramm kann aus einem computerlesbaren Datenträger gespeichert sein.

Das Computerprogramm, insbesondere die Instruktionen bzw.

Programmanweisungen, können auf bzw. in einem Datenträger einer Recheneinrichtung gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann eine Recheneinrichtung einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der Prozessor der Recheneinrichtung kann beispielsweise Zwischenergebnisse oder ähnliches in dem Hauptspeicher speichern.

Ein zuvor beschriebenes Modul, Element etc. kann zumindest teilweise Hardwareelemente (z.B. Prozessor, Speichermittel etc.) und/oder zumindest teilweise Softwareelemente (z.B. ausführbaren Code) umfassen.

Die Merkmale der Verfahren, Überwachungssysteme und Umspannstationen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das anmeldungsgemäße Verfahren, das anmeldungsgemäße Überwachungssystem und die anmeldungsgemäße Umspannstationen weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Überwachungssystems gemäß der vorliegenden Anmeldung mit einem Ausführungsbeispiel einer Umspannstation gemäß der vorliegenden Anmeldung, und
- Fig. 2: ein Diagramm eines Ausführungsbeispiels eines Verfahrens gemäß der vorliegenden Anmeldung zum Überwachen eines elektrischen Versorgungsnetzes.

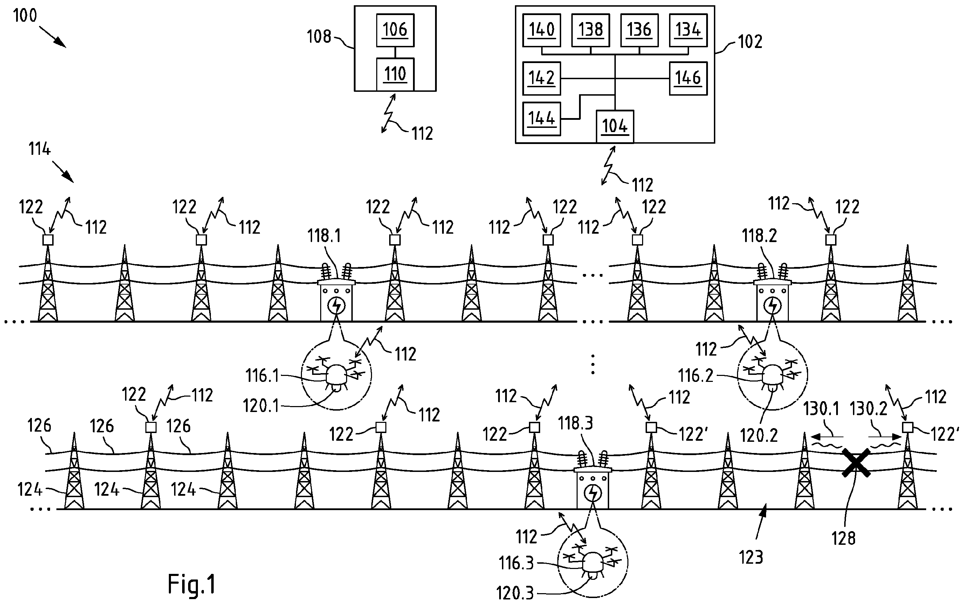

Die Figur 1 zeigt eine schematische Ansicht eines Ausführungsbeispiels eines Überwachungssystems 100 gemäß der vorliegenden Anmeldung mit einem Ausführungsbeispiel einer Umspannstation 118.1, 118.2, 118.3 gemäß der vorliegenden Anmeldung.

Das Überwachungssystem 100 umfasst vorliegend eine Recheneinrichtung 108 und eine Fahrzeugsteuervorrichtung 102. Bei anderen Varianten der Anmeldung kann eine gemeinsame zentrale Vorrichtung (wie eine zentrale Leitstelle) vorgesehen sein, in der die Recheneinrichtung und die Fahrzeugsteuervorrichtung integriert sind. Insbesondere kann ein Fahrzeugsteuermodul in diesem Fall in der Recheneinrichtung integriert sein.

Das Überwachungssystem 100 kann nur aus der Recheneinrichtung 108 und der Fahrzeugsteuervorrichtung 102 gebildet sein, oder, bei anderen Varianten der Anmeldung, weitere Vorrichtungen/Module umfassen, wie z.B. mindestens eine Wanderwellenmessvorrichtung 122, das zu überwachende elektrische Versorgungsnetz 114 (oder ein Teil hiervon), mindestens eine Umspannstation 118.1, 118.2, 118.3 und/oder mindestens ein unbemanntes Fahrzeug 116.1, 116.2, 116.3.

Die Recheneinrichtung 102 und/oder die Fahrzeugsteuervorrichtung 108 kann beispielsweise in einem (gemeinsamen) Backendsystem (gebildet durch einen oder mehrere (verteilte) Server) implementiert sein. Die Recheneinrichtung 102 und/oder die Fahrzeugsteuervorrichtung 108 können entfernt von einander und/oder insbesondere entfernt von weiteren Vorrichtungen/Modulen angeordnet sein, wie den Wanderwellenmessvorrichtungen 122, dem zu überwachenden elektrischen Versorgungsnetz 114, den Umspannstationen 118.1, 118.2, 118.3 und/oder den unbemannten Fahrzeugen 116.1, 116.2, 116.3, und insbesondere über mindestens ein Kommunikationsnetz 112 verbindbar sein.

Es versteht sich, dass zwei oder mehr unterschiedliche Kommunikationsnetze vorgesehen sein können. Beispielsweise kann ein unterschiedliches

Kommunikationsnetz für die Kommunikation zwischen Steuervorrichtung 108 und Recheneinrichtung 102 sowie zwischen Recheneinrichtung 102 und Wanderwellenmessvorrichtungen 122 oder zwischen Steuervorrichtung 108 und den unbemannten Fahrzeugen 116.1, 116.2, 116.3.

Das zu überwachende elektrische Versorgungsnetz 114 ist vorliegend beispielhaft ein Freileitungsnetz 114, beispielsweise ein 110-kV-Freileitungsnetz 114. Das Freileitungsnetz 114 umfasst eine Vielzahl von Masten 124 und eine Mehrzahl von elektrischen Leitungen 126 zum Übertragen von elektrischer Energie.

Ferner sind eine Mehrzahl von Wanderwellenmessvorrichtungen 122 verteilt im Freileitungsnetz 114 angeordnet, um elektromagnetische Wanderwellen zu detektieren, die sich aufgrund eines Netzfehlers bzw. Fehlerereignisses über die Leitungen 126 ausbreiten.

Es versteht sich, dass ein Freileitungsnetz 114 eine Vielzahl weiterer (zu Gunsten einer besseren Übersicht nicht gezeigten) Betriebsmittel, wie Freileitungsisolatoren, Schutzgeräte, Kurzschluss-/Erdschluss-Anzeiger etc. umfassen kann. Ferner versteht es sich, dass die Ausführungen zu dem beispielhaften Freileitungsnetz 114 auf andere Versorgungsnetze übertragen werden können.

Ferner umfasst das Freileitungsnetz 114 vorliegend eine Mehrzahl von geographisch verteilt angeordneten Umspannstationen 118.1, 118.2, 118.3. Eine Umspannstation 118.1, 118.2, 118.3 kann insbesondere mindestens einen (zu Gunsten einer besseren Übersicht nicht gezeigten) Transformator umfassen.

Vorliegend ist ferner vorgesehen, dass in den dargestellten Umspannstationen 118.1, 118.2, 118.3 jeweils mindestens ein unbemanntes und fernsteuerbares Fahrzeug 116.1, 116.2, 116.3 stationiert ist. Insbesondere kann die Basisstation des jeweiligen unbemannten Fahrzeugs 116.1, 116.2, 116.3 innerhalb der Umspannstation 118.1, 118.2, 118.3 angeordnet sein, das unbemannte Fahrzeug 116.1, 116.2, 116.3 also innerhalb der Umspannstation 118.1, 118.2, 118.3. Es versteht sich, dass in einer Umspannstation zwei oder mehr Fahrzeuge stationiert sein können. Die Umspannstation 118.1, 118.2, 118.3 kann insbesondere eine (nicht gezeigte) Ladestation umfassen. Die Ladestation kann insbesondere ein Bestandteil der Basisstation sein. Alternativ oder zusätzlich kann auch an anderen Orten, insbesondere entlang der Leitungen des mindestens einen überwachten Versorgungsnetz, mindestens eine Ladestation bzw. ein Ladepunkt zum Aufladen des mindestens einen unbemannten Fahrzeugs angeordnet sein.

Beispielhaft sind vorliegend als unbemannte und insbesondere von dem Fahrzeugsteuermodul 106 ansteuerbare Fahrzeug unbemannte Luftfahrzeuge 116.1, 116.2, 116.3, insbesondere in Form von Drohnen 116.1, 116.2, 116.3, vorgesehen.

Jedes unbemannte Luftfahrzeug 116.1, 116.2, 116.3 verfügt über mindestens einen optischen Sensor 120.1, 120.2, 120.3, vorzugsweise eine Kamera 120.1, 120.2, 120.3 und/oder eine Wärmebildkamera 120.1, 120.2, 120.3 und/oder eine Nachtsichtkamera 120.1, 120.2, 120.3.

Eine Ansteuerung bzw. Fernsteuerung erfolgt insbesondere über das mindestens eine Kommunikationsnetz 112. Hierzu kann das unbemannte Luftfahrzeug 116.1, 116.2, 116.3 über mindestens eine (nicht dargestellte) (bidirektionale) Kommunikationsschnittstelle verfügen. Die Kommunikationsschnittstelle kann zudem eingerichtet sein, aufgenommene Bilddaten einem Auswertemodul 134 der Recheneinrichtung 102 über das mindestens eine Kommunikationsnetz 112 zur Verfügung zu stellen.

Die Steuervorrichtung 108 umfasst mindestens ein (bidirektionales) Kommunikationsmodul 110 und mindestens ein Fahrzeugsteuermodul 106. Das Fahrzeugsteuermodul 106 ist eingerichtet zum Ansteuern (über das Kommunikationsmodul 110 und das mindestens eine Kommunikationsnetz 112) mindestens eines unbemannten Fahrzeugs 116.1, 116.2, 116.3, basierend auf der ermittelten geographischen Fehlerposition, derart, dass sich das unbemannte Fahrzeug 116.1, 116.2, 116.3 zu der ermittelten Fehlerposition bewegt und ein Inspizieren der ermittelten Fehlerposition durch Aufnehmen von Bilddaten in dem Bereich der ermittelten Fehlerposition mit mindestens einem optischen Sensor 120.1, 120.2, 120.3 des unbemannten Fahrzeugs 116.1, 116.2, 116.3 durchführt.

Die ermittelte geographische Fehlerposition, insbesondere in Form eines Zielkoordinatensatzes, kann von einem Übertragungsmodul 104, vorliegend ein (bidirektionales) Kommunikationsmodul 104 der Recheneinrichtung 102, eingerichtet zum Übertragen der ermittelten geographischen Fehlerposition, an das Fahrzeugsteuermodul 106, übertragen werden. Wenn das Fahrzeugsteuermodul in der Recheneinrichtung integriert ist, kann das Übertragungsmodul durch eine interne Schnittstelle gebildet sein.

Die Recheneinrichtung 102 umfasst vorliegend neben dem Kommunikationsmodul 104 und dem Auswertemodul 134, ein Positionsermittlungsmodul 136, eine geographische Informationsdatenbank 138, ein Bildschirmmodul 140, eine Datenbank 142 zum Speichern (sämtlicher) mit einem Netzfehler in Relation stehenden erfassten Netzfehlerdaten, ein Bilddatenvergleichsmodul 146 und ein Prognosemodul 144. Es versteht sich, dass bei anderen Varianten auch weniger oder mehr Module vorgesehen sein können.

Wie zuvor beschrieben wurde, kann der Zustand des überwachten elektrischen Versorgungsnetzes auf dem Bildschirmmodul 140 dargestellt werden (beispielsweise in Form einer Heatmap), zumindest basierend auf den gespeicherten Netzfehlerdaten.

Darüber hinaus kann, wie bereits beschrieben wurde, basierend auf den gespeicherten Netzfehlerdaten, für mindestens ein in dem elektrischen Versorgungsnetz 114 installiertes Betriebsmittel, eine Restlebensdauer des installierten Betriebsmittels prognostiziert werden, insbesondere durch das Prognosemodul 144

Die Funktionsweise des Überwachungssystems 100 wird nachfolgend mit Hilfe der

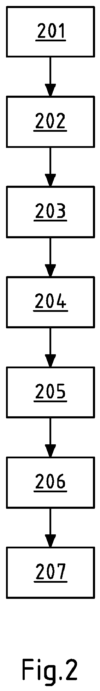

Figur 2 näher beschrieben. Die Figur 2 zeigt ein Diagramm eines Ausführungsbeispiels eines Verfahrens gemäß der vorliegenden Anmeldung. Das Verfahren kann insbesondere zum Betreiben eines Überwachungssystems 100 verwendet werden.

In einem ersten Schritt 201 erfolgt ein Ermitteln einer geographischen Fehlerposition eines in dem elektrischen Versorgungsnetz 114 aufgetretenen Netzfehlers, basierend auf der Wanderwellenortungsmethode. Beispielhaft ist mit dem Bezugszeichen 128 ein Fehlerereignis bzw. ein Ursprungsort des Fehlerereignisses bzw. Netzfehlers in dem elektrischen Versorgungsnetz 114 dargestellt. Der Netzfehler verursacht ein Aussenden von elektromagnetischen Wanderwellen entlang der Leitung der Leitungsstrecke 123 in die Richtungen 130.1 und 130.2.

Wanderwellen im Versorgungsnetz 114 breiten sich mit nahezu Lichtgeschwindigkeit entlang der elektrischen Leitungen im Versorgungsnetz 114. Die Wanderwellen werden vorliegend beispielhaft an den beiden Enden der Leitungsstrecke 123 gemessen.

Insbesondere wird die jeweils erste vom Fehlerort 128 ausgehende Welle mit einer zeitsynchronisierten Messung jeweils durch eine Wanderwellenmessvorrichtung 122' gemessen, also der jeweilige Erfassungszeitpunkt der Wanderwelle erfasst. Jede Wanderwellenmessvorrichtung 122' kann einen Messdatensatz generieren, umfassend den Empfangszeitpunkt und eine Positionsinformation der jeweils messenden Wanderwellenmessvorrichtung 122'.

Die generierten Messdatensätze können über das mindestens eine Kommunikationsnetz 112 an das Backendsystem übertragen werden und insbesondere dem Positionsermittlungsmodul 136 bereitgestellt werden. Das Positionsermittlungsmodul 136 ist vorliegend eingerichtet, die Fehlerposition zu bestimmen, basierend auf den beiden Messdatensätzen und den in der geographischen Informationsdatenbank 138 gespeicherten geographischen Positionsdaten des Versorgungsnetzes 114.

Insbesondere kann durch ein Vergleichen der beiden Erfassungszeitpunkte der Messdatensätze bei bekannter Leitungslänge (z.B. aufgrund der gespeicherten Positionsdaten) und bekannter Wellenausbreitungsgeschwindigkeit der Fehlerort bestimmt werden, insbesondere mit einer hohen Genauigkeit. Bei einem derartigen beidseitigen Messverfahren kann der Erfassungszeitpunkt bzw. die Ankunftszeit der jeweils ersten gemessenen Wanderwellen an den Enden einer überwachten Leitungsstrecke 123 miteinander verglichen werden und so die Entfernung der Wanderwellenmessvorrichtungen 122' zur Fehlerposition bestimmt werden.

Basierend auf den jeweiligen Positionsinformationen der

Wanderwellenmessvorrichtungen 122' kann mittels der gespeicherten Positionsdaten dann die geographische Fehlerposition insbesondere in Form eines geographischen Zielkoordinatendatensatz ermittelt werden.

Der geographische Zielkoordinatendatensatz kann insbesondere geographische Zielkoordinaten, wie GPS-Daten, Galileo-Daten oder dergleichen umfassen. Insbesondere können die Koordinaten einen Zielbereich angeben, der die Messtoleranz der eingesetzten Wanderwellenortungsmethode berücksichtigt.

In einem Schritt 202 erfolgt ein Übertragen der ermittelten geographischen Fehlerposition, durch das Übertragungsmodul 104, an mindestens ein Fahrzeugsteuermodul 106, wie zuvor beschrieben wurde.

In Schritt 203 erfolgt ein Ansteuern, durch das Fahrzeugsteuermodul 106, mindestens eines unbemannten Fahrzeugs 116.1, 116.2, 116.3, basierend auf der ermittelten geographischen Fehlerposition, derart, dass sich das unbemannte Fahrzeug 116.1, 116.2, 116.3 zu dem Bereich der ermittelten Fehlerposition bewegt. Insbesondere kann durch das Fahrzeugsteuermodul 106 ein Fernsteuern des mindestens einen unbemannten Fahrzeugs 116.1, 116.2, 116.3 erfolgen.

Beispielsweise kann mindestens ein Steuerdatensatz über das mindestens eine Kommunikationsnetz 112 übertragen werden. Der mindestens eine Steuerdatensatz kann zumindest den Zielkoordinatensatz umfassen. Zusätzlich können vorzugsweise weitere Steuerparameter vorgegeben werden, wie die zu fliegende/fahrende Route (beispielsweise kann es hier Vorgaben geben, bestimmte Gebiete nicht zu durchqueren), die Geschwindigkeit (z.B. möglichst schnell, möglichst energiesparend) etc. Auch können Vorgaben zum Inspektionsvorgang gemacht werden.

Das Ansteuern, in Schritt 203, kann vorzugsweise ein Auswählen eines unbemannten Fahrzeugs 116.1, 116.2, 116.3 aus einer Mehrzahl von verfügbaren unbemannten Fahrzeugen 116.1, 116.2, 116.3 umfassen. Das Auswählen kann zumindest basierend auf der ermittelten Fehlerposition und der jeweiligen Positionsinformationen der verfügbaren unbemannten Fahrzeuge 116.1, 116.2, 116.3 (beispielsweise können die Positionsinformationen in den gespeicherten Positionsdaten des Versorgungsnetzes), sowie mindestens einer Auswahlregel erfolgen.

In der Auswahlregel kann beispielsweise festgelegt sein, dass (stets) das unbemannte Fahrzeug 116.1, 116.2, 116.3 ausgewählt wird, welches die geringste Entfernung (hier kann insbesondere die tatsächlich zurückzulegende Route und nicht die Luftliniendistanz herangezogen werden) zur geographischen Fehlerposition 128 besitzt. Im vorliegenden Beispiel wird daher das unbemannte Fahrzeug 116.3 ausgewählt.

Wie bereits beschrieben wurde, kann alternativ oder vorzugsweise zusätzlich das Ansteuern eines unbemannten Fahrzeugs 116.1, 116.2, 116.3 ein Auswählen eines unbemannten Fahrzeugs 116.1, 116.2, 116.3 aus einer Mehrzahl von verfügbaren unbemannten Fahrzeugen 116.1, 116.2, 116.3 umfassen, zumindest basierend auf dem jeweiligen Zustand der verfügbaren unbemannten Fahrzeuge 116.1, 116.2, 116.3 und/oder den jeweiligen Leistungsdaten der verfügbaren unbemannten Fahrzeuge 116.1, 116.2, 116.3 (sowie der mindestens einen Auswahlregel).

Der mindestens eine Steuerdatensatz kann zusätzlich mindestens eine Inspektionsvorgabe enthalten, um den Inspektionsprozess zu steuern. Insbesondere kann das Fahrzeugsteuermodul 106 (z.B. durch Übertragen von entsprechenden Steuerparametern an das unbemannte Fahrzeug 116.3) eingerichtet sein zum Ansteuern des unbemannten Fahrzeugs 116.3, basierend auf der ermittelten geographischen Fehlerposition, derart, dass sich das unbemannte Fahrzeug 116.3 zu der ermittelten Fehlerposition bewegt und ein Inspizieren der ermittelten Fehlerposition durch Aufnehmen von Bilddaten in dem Bereich der ermittelten Fehlerposition mit mindestens einem optischen Sensor 120.3 des unbemannten Fahrzeugs 116.3 durchführt.

So erfolgt in Schritt 204 ein Inspizieren der ermittelten Fehlerposition durch Aufnehmen von Bilddaten in dem Bereich der ermittelten Fehlerposition durch mindestens einen optischen Sensor 120.3 des unbemannten Fahrzeugs 116.3, wie bereits beschrieben wurde.

In Schritt 205 erfolgt ein Bereitstellen, durch das unbemannte Fahrzeug 116.3 zumindest eines Teils der aufgenommenen Bilddaten einem Auswertemodul 134 des Backendsystems, vorzugsweise in Echtzeit via das mindestens eine Kommunikationsnetz 112, wie bereits beschrieben wurde.

In Schritt 206 erfolgt ein Auswerten, durch das Auswertemodul 134, der bereitgestellten Bilddaten, derart, dass eine Fehlerart des Netzfehlers und/oder ein durch den Netzfehler verursachter Schaden bestimmt wird. Das Auswerten kann ein Abgleichen (bzw. Vergleichen) der Bilddaten mit gespeicherten historischen Netzfehlerdaten bzw. den in der Datenbank 142 gespeicherten Daten umfassen.

Beispielsweise können historische Bilddaten von vergangenen Netzfehlern und deren Schadensbilder gespeichert sein. Durch einen Vergleich (insbesondere ausgeführt durch das Bilddatenvergleichsmodul 146, das in dem Auswertemodul 134 integriert sein kann) kann eine Fehlerart des Netzfehlers und/oder ein durch den Netzfehler verursachter Schaden (automatisch) insbesondere zeitnah und in exakter Weise bestimmt werden. Die Ergebnisse der Inspektion, insbesondere die aufgenommenen Bilddaten, können gespeichert werden und insbesondere direkt bewertet/weiterverarbeitet werden. Ein Abgleich mit weiteren Informationen und Daten, bspw. historischen/statistischen Erfahrungen zu den Auswirkungen von Fehlerauswirkungen und/oder Wanderwellen-Einflüsse auf Betriebsmittel usw. können bei der Auswertung berücksichtigt werden.

In dem optionalen Schritt 207 kann ein (automatisches) Bewirken, durch das Auswertemodul 134, mindestens einer Maßnahme zur Beseitigung des Netzfehlers erfolgen, basierend auf der Auswertung der aufgenommenen Bilddaten. Beispielsweise kann eine Reparatur des bestimmten Schadens unmittelbar veranlasst werden.

Die anmeldungsgemäße Lösung unterscheidet sich vom Stand der Technik insbesondere darin, dass sie einen durchgehend automatisierten, ressourcenschonenden/effizienten Prozess zur ereignisgesteuerten Leitungsinspektion mit insbesondere unbemannten Drohnen ermöglicht. Dadurch kann ebenfalls die Grundlage für eine fortschrittlichere, zustandsorientierte Instandhaltung geschaffen werden.

Insbesondere können folgende Vorteile erreicht werden:
- Leitungsinspektionen können ereignisorientiert, zielgerichteter, schneller, kostengünstiger, ressourcen-schonender und mit höherer Erfolgswahrscheinlichkeit erfolgen
- Die Wahrscheinlichkeit Schaden zu entdecken ist erhöht
- Eine Waldbrandfrüherkennung kann unterstützt werden
- Der Personalaufwand, ökologische Fußabdruck und die Arbeitssicherheit des Personals (Gefahr des Umknickens, Stolperns und Stürzens) bei der Leitungsinspektion im Fehlerfall kann reduziert werden.

## Patentansprüche

1. Verfahren zum Überwachen eines elektrischen Versorgungsnetzes (114), umfassend:
- Ermitteln einer geographischen Fehlerposition eines in dem elektrischen Versorgungsnetz (114) aufgetretenen Netzfehlers, basierend auf der Wanderwellenortungsmethode,
- Übertragen der ermittelten geographischen Fehlerposition an mindestens ein Fahrzeugsteuermodul (106),
- Ansteuern, durch das Fahrzeugsteuermodul (106), mindestens eines unbemannten Fahrzeugs (116.1, 116.2, 116.3), basierend auf der ermittelten geographischen Fehlerposition, derart, dass sich das unbemannte Fahrzeug (116.1, 116.2, 116.3) zu dem Bereich der ermittelten Fehlerposition bewegt,
- basierend auf der Ansteuerung, Inspizieren der ermittelten Fehlerposition durch Aufnehmen von Bilddaten in dem Bereich der ermittelten Fehlerposition durch mindestens einen optischen Sensor (120.1, 120.2, 120.3) des unbemannten Fahrzeugs (116.1, 116.2, 116.3),
- Bereitstellen, durch das unbemannte Fahrzeug (116.1, 116.2, 116.3), zumindest eines Teils der aufgenommenen Bilddaten einem Auswertemodul (134), und
- Auswerten, durch das Auswertemodul (134), der bereitgestellten Bilddaten, derart, dass eine Fehlerart des Netzfehlers und/oder ein durch den Netzfehler verursachter Schaden bestimmt wird.

2. Verfahren nach Anspruch 1, **dadurch gekennzeichnet, dass**
- das Ermitteln der geographischen Fehlerposition eines in dem elektrischen Versorgungsnetz (114) aufgetretenen Netzfehlers ein Erfassen einer Wanderwelle, die durch den Netzfehler ausgelöst wird, durch mindestens eine in dem elektrischen Versorgungsnetz (114) installierte Wanderwellenmessvorrichtung (122, 122') umfasst,
- wobei bei einer Erfassung einer Wanderwelle mindestens ein Messdatensatz durch die Wanderwellenmessvorrichtung (122, 122') erzeugt wird,
- wobei der Messdatensatz zumindest den Erfassungszeitpunkt der Wanderwelle enthält.

3. Verfahren nach Anspruch 2, **dadurch gekennzeichnet, dass**
- basierend auf dem mindestens einen Messdatensatz ein Bestimmen der Entfernung der Netzfehlerposition, an dem der Netzfehler die Wanderwelle ausgelöst hat, zu der mindestens einen Wanderwellenmessvorrichtung (122, 122') erfolgt.

4. Verfahren nach Anspruch 2 oder 3, **dadurch gekennzeichnet, dass**
- bei einer Erfassung einer Wanderwelle durch die Wanderwellenmessvorrichtung (122, 122') der erzeugte Messdatensatz und zumindest eine Positionsinformation der Wanderwellenmessvorrichtung (122, 122') durch ein Positionsermittlungsmodul (136) erhalten wird, und
- eine geographischen Fehlerposition ermittelt wird, basierend auf dem erhaltenen Messdatensatz, der Positionsinformation der Wanderwellenmessvorrichtung (122, 122') und/oder in einer geographischen Informationsdatenbank (138) gespeicherten Positionsdaten des elektrischen Versorgungsnetzes (114).

5. Verfahren nach einem der vorherigen Ansprüche, **dadurch gekennzeichnet, dass**
- das Bereitstellen der aufgenommenen Bilddaten ein Erhalten der Bilddaten durch das Auswertemodul zumindest unmittelbar nach einem Aufnehmen der Bilddaten durch den optischen Sensor (120.1, 120.2, 120.3) des unbemannten Fahrzeugs (116.1, 116.2, 116.3) umfasst.

6. Verfahren nach einem der vorherigen Ansprüche, **dadurch gekennzeichnet, dass**
- das Auswerten der Bilddaten ein Abgleichen der Bilddaten mit gespeicherten historischen Netzfehlerdaten umfasst.

7. Verfahren nach einem der vorherigen Ansprüche, **dadurch gekennzeichnet, dass**
- das Ansteuern eines unbemannten Fahrzeugs (116.1, 116.2, 116.3) ein Auswählen eines unbemannten Fahrzeugs (116.1, 116.2, 116.3) aus einer Mehrzahl von verfügbaren unbemannten Fahrzeugen (116.1, 116.2, 116.3) umfasst, zumindest basierend auf der ermittelten Fehlerposition und der jeweiligen Positionsinformationen der verfügbaren unbemannten Fahrzeuge (116.1, 116.2, 116.3).

8. Verfahren nach einem der vorherigen Ansprüche, **dadurch gekennzeichnet, dass**
- das Ansteuern eines unbemannten Fahrzeugs (116.1, 116.2, 116.3) ein Auswählen eines unbemannten Fahrzeugs (116.1, 116.2, 116.3) aus einer Mehrzahl von verfügbaren unbemannten Fahrzeugen (116.1, 116.2, 116.3) umfasst, zumindest basierend auf dem jeweiligen Zustand der verfügbaren unbemannten Fahrzeuge (116.1, 116.2, 116.3) und/oder den jeweiligen Leistungsdaten der verfügbaren unbemannten Fahrzeuge (116.1, 116.2, 116.3).

9. Verfahren nach einem der vorherigen Ansprüche, **dadurch gekennzeichnet, dass**
- zumindest die mit einem Netzfehler in Relation stehenden erfassten Netzfehlerdaten in einer Datenbank (142) gespeichert werden,
- wobei der Zustand des überwachten elektrischen Versorgungsnetzes (114) auf einem Bildschirmmodul (140) dargestellt wird, zumindest basierend auf den gespeicherten Netzfehlerdaten.

10. Verfahren nach Anspruch 9, **dadurch gekennzeichnet, dass**
- basierend auf den gespeicherten Netzfehlerdaten für mindestens ein in dem elektrischen Versorgungsnetz (114) installiertes Betriebsmittel eine Restlebensdauer prognostiziert wird.

11. Überwachungssystem (100) zum Überwachen eines elektrischen Versorgungsnetzes (114), umfassend:
- mindestens ein Positionsermittlungsmodul (136), eingerichtet zum Ermitteln einer geographischen Fehlerposition eines in dem elektrischen Versorgungsnetz (114) aufgetretenen Netzfehlers, basierend auf der Wanderwellenortungsmethode,
- mindestens ein Fahrzeugsteuermodul (106),
- mindestens ein Übertragungsmodul (104), eingerichtet zum Übertragen der ermittelten geographischen Fehlerposition an das Fahrzeugsteuermodul (106),
- wobei das Fahrzeugsteuermodul (106) eingerichtet ist zum Ansteuern mindestens eines unbemannten Fahrzeugs (116.1, 116.2, 116.3), basierend auf der ermittelten geographischen Fehlerposition, derart, dass sich das unbemannte Fahrzeug (116.1, 116.2, 116.3) zu der ermittelten Fehlerposition bewegt und ein Inspizieren der ermittelten Fehlerposition durch Aufnehmen von Bilddaten in dem Bereich der ermittelten Fehlerposition mit mindestens einem optischen Sensor (120.1, 120.2, 120.3) des unbemannten Fahrzeugs (116.1, 116.2, 116.3) durchführt,
- mindestens ein Auswertemodul (134), eingerichtet zum Auswerten von durch das unbemannte Fahrzeug (116.1, 116.2, 116.3) bereitgestellten Bilddaten,
- wobei das Auswertemodul (134) eingerichtet ist zum Auswerten der Bilddaten, derart, dass eine Fehlerart des Netzfehlers und/oder ein durch den Netzfehler verursachter Schaden bestimmt wird.

12. Überwachungssystem (100) nach Anspruch 11, **dadurch gekennzeichnet, dass**
- eine Umspannstation (118.1, 118.2, 118.3) des elektrischen Versorgungsnetzes (114) eine Basisstation des mindestens einen unbemannten Fahrzeugs (116.1, 116.2, 116.3) umfasst.

13. Umspannstation (118.1, 118.2, 118.3) mit einem innerhalb der Umspannstation stationierten unbemannten Fahrzeug (116.1, 116.2, 116.3), wobei das unbemannten Fahrzeug (116.1, 116.2, 116.3) ansteuerbar ist von einem Fahrzeugsteuermodul (106) basierend auf einer durch eine Wanderwellenortungsmethode ermittelte geographischen Fehlerposition eines in dem elektrischen Versorgungsnetz (114) aufgetretenen Netzfehlers, derart, dass sich das unbemannte Fahrzeug (116.1, 116.2, 116.3) zu der ermittelten Fehlerposition bewegt und ein Inspizieren der ermittelten Fehlerposition durch Aufnehmen von Bilddaten in dem Bereich der ermittelten Fehlerposition mit mindestens einem optischen Sensor (120.1, 120.2, 120.3) des unbemannten Fahrzeugs (116.1, 116.2, 116.3) durchführt.
